# EUROPÄISCHE PATENTSCHRIFT

(11) **EP 0 725 895 B1**
(45) Veröffentlichungstag und Bekanntmachung des Hinweises auf die Patenterteilung: **25.03.1998**
(21) Anmeldenummer: 94930926.4
(22) Anmeldetag: 25.10.1994
(51) Int. Cl.: F02G 1/044, F02G 1/055

(54) **ENERGIEERZEUGUNGSEINRICHTUNG**
ENERGY GENERATING SYSTEM
SYSTEME GENERATEUR D'ENERGIE

(30) Priorität: 29.10.1993 DE 4336975
(43) Veröffentlichungstag der Anmeldung: 14.08.1996
(73) Patentinhaber: Daimler-Benz Aerospace Aktiengesellschaft, 80995 München (DE)
(72) Erfinder: Ehrig, Dietrich, D-28879 Grasberg (DE)
(74) Vertreter: Hansmann, Dierk, Dipl.-Ing.
(86) Internationale Anmeldenummer: DE9401252
(87) Internationale Veröffentlichungsnummer: WO9512065

(56) Entgegenhaltungen:
- EP-A- 0 332 267
- DE-A- 3 608 797
- DE-A- 3 834 071
- DE-A- 3 907 768
- GB-A- 2 151 011

## Beschreibung

Die Erfindung betrifft eine Energieerzeugungseinrichtung, insbesondere für Satelliten und Raumstationen, auf der Basis von Stirlingmotoren, bei der die Stirlingmotoren mit einer Vorrichtung zur Adsorption von Strahlungswärme gekoppelt sind.

Nach dem Stirling-Kreisprozeß arbeitende Motoren sind seit langem bekannt. Wie bei Diesel- und Ottomotoren beruht auch ihr Arbeitsprinzip darauf, daß ein Prozeßgas bei niedriger Temperatur komprimiert wird und anschließend bei hoher Temperatur expandiert. Im Gegensatz zu den beiden letztgenannten Motoren wird das Prozeßgas beim Stirlingmotor jedoch nicht durch eine innere Verbrennung erhitzt, sondern die Wärme wird dem Prozeßgas kontinuierlich von außen zugeführt. Deshalb können mit dem Stirlingmotor Temperaturdifferenzen in nahezu beliebigen Bereichen in mechanische Arbeit umgewandelt werden.

Nachdem der Stirlingmotor ursprünglich als Einzylindermotor mit zwei belasteten Kolben ausgebildet war und später überwiegend in der sogenannten V-Anordnung verwendet wurde, bei der ein Verdränger in einem und ein Kolben in einem zweiten Zylinder angeordnet war, kommen in jüngerer Zeit sogenannte doppelt wirkende Stirlingmotoren zum Einsatz, bei denen beispielsweise vier Zylinder in geeigneter Phasenverschiebung hintereinander arbeiten. Jeder dieser Zylinder besitzt in dieser letztgenannten Anordnung nur einen Kolben, der zugleich als Verdränger für den nachfolgenden Kolben dient. Allen Stirlingmotoren gemeinsam sind die Komponenten Erhitzer, Regenerator und Kühler, die bei der V-Anordnung zwischen dem Verdränger und dem Kolben, beim doppelt wirkenden Stirlingmotor jeweils zwischen den einzelnen Zylindern angeordnet sind.

Stirlingmotoren werden in der Regel mit einer ständig brennenden Flamme betrieben, wobei die unterschiedlichsten Brennstoffe Verwendung finden. Es wurde aber auch bereits vorgeschlagen, Stirlingmotoren mit Sonnenenergie zu betreiben und diese beispielsweise zur Meerwasserentsalzung einzusetzen. Aus der DE-A-3 907 768 ist darüber hinaus ein solarbeheizter Wärmetauscher für Hochtemperatur-Anwendungen bekannt geworden, der entsprechend dem Gattungsbegriff zur Übertragung von Strahlungswärme auf Erhitzen von Stirlingmotoren dient. Die in Form von Sonnenenergie adsorbierte Strahlungswärme heizt bei dieser bekannten Vorrichtung ein Wärmetransportmedium, das aus einem Flüssigmetall besteht, auf eine Temperatur in der Größenordnung von etwa 600°C auf, wobei dieses Wärmetransportmedium den Erhitzer des Stirlingsmotors beaufschlagt.

Neben dem eingangs erwähnten Vorteil eines für die Erzeugung mechanischer Wärme beliebigen nutzbaren Temperaturintervalls zeichnen sich Stirlingmotoren durch einen hohen Wirkungsgrad, einen günstigen Drehmomentverlauf im Bereich der Betriebsdrehzahlen sowie einen vibrationsfreien Lauf aus. Dennoch ist das Einsatzgebiet von Stirlingmotoren noch immer sehr begrenzt. So finden in Satelliten und Raumstationen derzeit in erster Linie fotovoltaische Energieerzeugungsanlagen Verwendung, obwohl die mit ihnen erzielbare Energieausbeute vergleichsweise gering ist.

Insbesondere wird bei künftigen Raumstationen der Energiebedarf so hoch sein, daß er auf fotovoltaischem Wege kaum noch wird gedeckt werden können.

Aufgabe der Erfindung ist es, eine Energieerzeugungseinrichtung auf der Basis des Stirling-Heißluftmotors bereitzustellen, die sowohl für terrestrische Anwendungen, insbesondere aber auch für einen Einsatz in Orbitalstationen geeignet ist.

Die Erfindung löst diese Aufgabe durch eine Energieerzeugungseinrichtung mit den kennzeichnenden Merkmalen des Patentanspruches 1. Vorteilhafte Weiterbildungen der erfindungsgemäßen Energieerzeugungseinrichtungen sind in den weiteren Ansprüchen angegeben.

So ermöglicht das in der bevorzugten Ausführungsform der Erfindung vorgesehene Kreuzrädergetriebe mit Massenausgleich einen extrem leichten Aufbau der Anordnung. Da bei diesem Getriebe keine Massenkräfte erster und zweiter Ordnung wirksam werden, weist die Energieerzeugungseinrichtung nach der Erfindung ein Minimum an Vibrationen auf.

Da die erfindungsgemäßen Energieerzeugungseinrichtungen vollständig gekapselt aufgebaut werden können, brauchen die Prozeßgasdrücke von üblicherweise mehr als 10 MPa (Prozeßgas ist dabei vorzugsweise Helium oder Wasserstoff) nicht zur Umgebung hin abgedichtet zu werden. Im Getriebe herrscht dabei ein Druck, der zwischen dem Druck beim Kompressions- und dem Arbeitshub liegt. Da nur die auftretenden Differenzen zwischen diesem mittleren Druck und dem Kompressions- bzw. Arbeitsdruck abgedichtet werden müssen, ist der an den Kolbenringen auftretende bzw. der von den Kolbenringen an den Laufflächen hervorgerufene Verschleiß äußerst gering, so daß die erfindungsgemäßen Energieerzeugungseinrichtungen praktisch wartungsfrei sind und sich durch eine hohe Lebensdauer auszeichnen.

Durch das in weiterer Ausgestaltung der Erfindung vorgesehene Wärmetauschersystem, das aufgrund des in den Heizrohren erzeugten Dralls bzw. angepaßter Strahlungs-Flächenscheiben mit geringem Abstrahlvolumen thermodynamisch optimiert ist, ist im Heizgasbereich ein nur geringes Totvolumen vorhanden, wodurch ein entsprechend hoher Wirkungsgrad gewährleistet ist.

In der Zeichnung sind Ausführungsbeispiele der Erfindung schematisch dargestellt. Es zeigen:
- Fig. 1: einen Horizontalschnitt durch einen Stirlingmotor mit vier Zylindern,
- Fig. 2: einen Vertikalschnitt durch einen Teil einer Energieerzeugungseinrichtung auf der Basis der in Fig. 1 gezeigten Anordnung,
- Fig. 3: einen Schnitt gemäß III-III durch die in Fig. 2 gezeigte Anordnung und
- Fig. 4 und 5: zwei Detaildarstellungen der in den Figuren 2 und 3 gezeigten Anordnung.

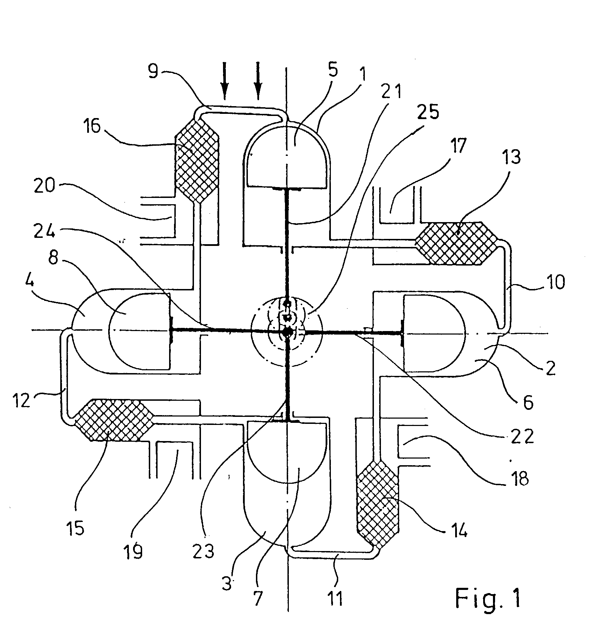

Bei der Anordnung gemäß Fig. 1 handelt es sich um die schematische Darstellung eines doppelt wirkenden Stirlingmotors mit vier Zylindern 1 bis 4, die mit einer Phasenverschiebung von jeweils 90° hintereinander arbeitet. In jedem der Zylinder 1 bis 4 ist ein Kolben 5 bis 8 angeordnet, der zugleich als Verdränger für den nachfolgenden Zylinder arbeitet. Zwischen je zwei aufeinanderfolgenden Zylindern sind jeweils ein Erhitzer 9 bis 12, ein Regenerator 13 bis 16 und ein Kühler 17 bis 20 angeordnet. Schließlich ist jeder der Kolben 5 bis 8 über eine Kolbenstange 21 bis 24 mit einem Kreuzrädergetriebe 25 verbunden.

Die für die Verrichtung mechanischer Arbeit erforderliche Energie wird dem Prozeßgas, im Fall des hier beschriebenen Ausführungsbeispiels Wasserstoff oder Helium, durch Strahlungswärme im Bereich der Erhitzer 9 bis 12 zugeführt, wie dies in Fig. 1 für den Erhitzer 9 durch Pfeile angedeutet ist. Dabei ist jeweils die dem Erhitzer 9 bis 12 zugewandte Seite der Zylinder 1 bis 4 die heiße Seite, während die den Kühlern 17 bis 20 zugewandte Seite die kalte Seite ist. Das Prozeßgas wird jeweils zwischen zwei aufeinanderfolgenden Kolben zyklisch hin- und hergeschoben.

Die zwischen jedem der Kühler 17 bis 20 und dem zugeordneten Erhitzer 9 bis 12 jeweils angeordneten Regeneratoren 13 bis 16 dienen als Kurzzeit-Wärmespeicher bzw. Absorber, die einerseits dem aus dem heißen Bereich des Zylinders ausströmenden Prozeßgas Wärme entziehen, so daß diese nicht vollständig als Abwärme im Kühler verlorengeht, und die andererseits die gespeicherte Wärme an das in den heißen Bereich einströmende Prozeßgas abgeben und es damit schon aufheizen, bevor es den Erhitzer erreicht. Bei den hier beschriebenen Ausführungsbeispielen sind die Regeneratoren 13 bis 16 (bzw. die entsprechenden Regeneratoren der nachfolgend beschriebenen Anordnung) durch eine Minimierung der Strömungsverluste und Totvolumina sowie durch eine Maximierung ihrer Wärmespeicherkapazität thermodynamisch so optimiert, daß sie hohe Wirkungsgrade der jeweiligen Energieerzeugungseinrichtungen ermöglichen. Der Abtransport der Verlustwärme von den Kühlern 17 bis 20 erfolgt über in den Figuren nicht dargestellte Wärmerohre, sogenannte Heat-pipes.

Infolge der kreuzförmigen Anordnung der vier Zylinder 1 bis 4 mit dem Kreuzrädergetriebe 25 ergibt sich ein sinusförmiger Verlauf der rotierenden Massenkräfte mit einem weitgehend gleichförmigen Verlauf des Drehmomentes bei jeder 360°-Drehung, so daß bei dieser Anordnung auf ein energiezehrendes Schwungrad verzichtet werden kann.

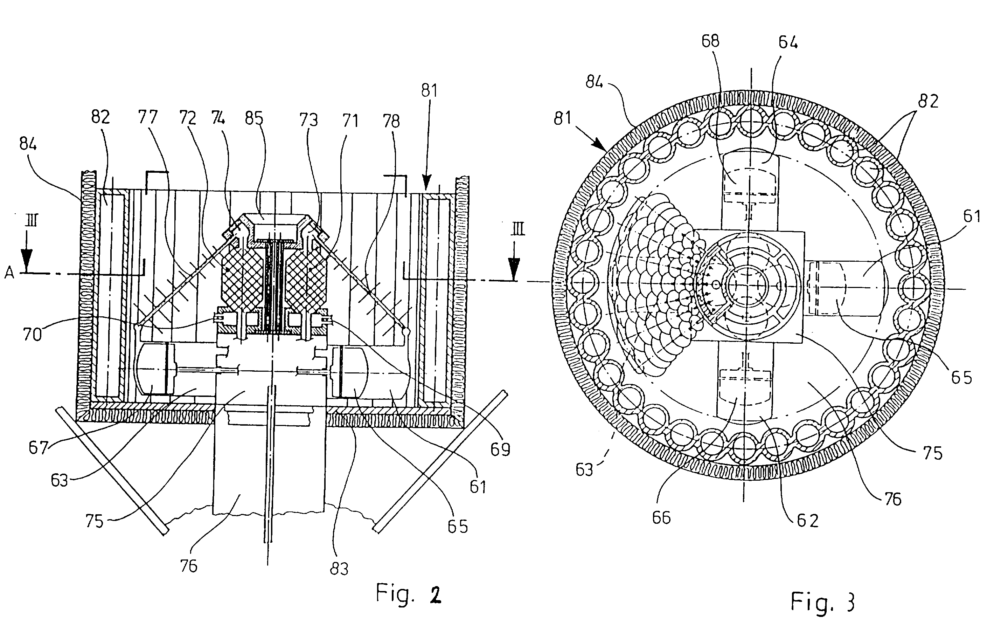

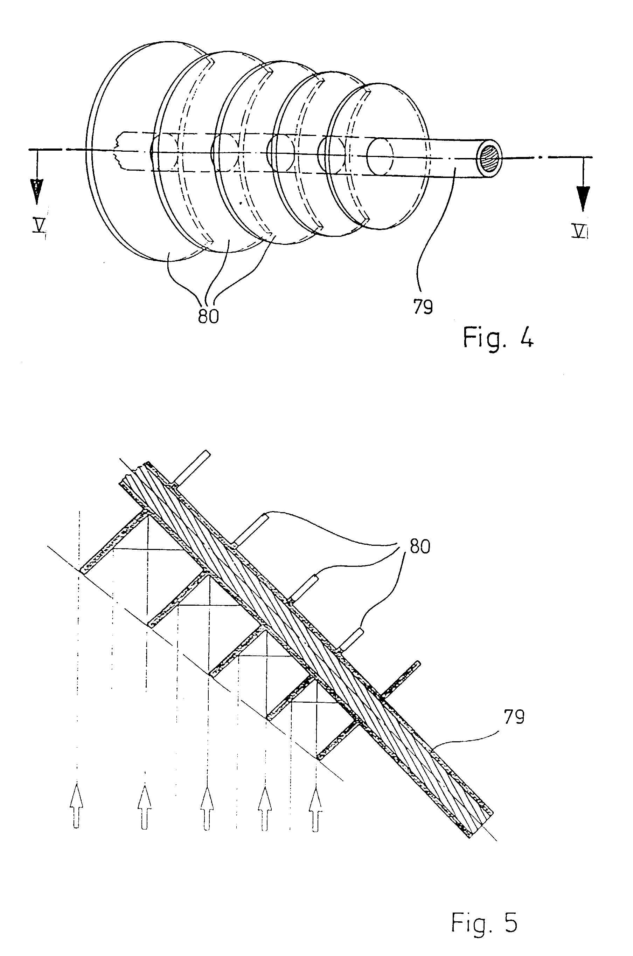

In den Figuren 2 bis 5 sind Einzelheiten einer Energieerzeugungsanlage dargestellt, bei der ein aus vier Zylindern 61 bis 64 bestehender Stirlingmotor mit Scheibenkollektoren 77,78 zur Adsorption der einfallenden Sonnenstrahlung kombiniert ist. Die Kolben 65 bis 68 der vier kreuzförmig angeordneten Zylinder 61 bis 64 wirken auf ein zentral angeordnetes Kreuzrädergetriebe 75, das sich in einem Gehäuse 76 befindet. Während die Regeneratoren 71,71 sowie die Kühler 69,70 analog zu der vorstehend beschriebenen Anordnung aufgebaut sind, sind die Erhitzer 73,74 mit 77,78 gekoppelt. Der Aufbau eines solchen Scheibenkollektors ist dabei in den Figuren 4 und 5 dargestellt.

Wie erkennbar, wird die durch Pfeile gekennzeichnete einfallende Sonnenstrahlung von den auf einem vom Prozeßgas durchströmten Rohr 79 angeordneten scheibenförmigen Kollektorflächen 80 adsorbiert und deren Energie auf das Prozeßgas übertragen.

Die gesamte Anordnung ist schließlich von einem einseitig offenen zylindrischen Schmelzspeicher 81 umgeben. Dieser besteht aus einer Vielzahl von ringförmig angeordneten Röhren 82, die mit einem Schmelsalz oder mit einer Silber-Zinn-Legierung gefüllt sind und die als Wärmespeicher wirken. Der Einsatz eines derartigen Schmelspeichers ist insbesondere bei terrestrischen Solarenergie-Erzeugungsanlagen und bei im niedrigen Erd-Orbit fliegenden Raumstationen sinnvoll, um kurzfristige Leistungsschwankungen, die durch den Erdschatten oder durch Wolken bedingt sind, ausgleichen zu können. Auf der Außenseite des Schmelzspeichers 81 sowie unterhalb einer die Röhren 82 tragenden Grundplatte 83 ist ein Isoliermantel 84 angeordnet, um den Wirkungsgrad der Anordnung noch weiter zu erhöhen. Dem gleichen Zweck dient schließlich eine Strahlenfalle 85, die zwischen den Erhitzern 73, 74 angeordnet ist.

In den Figuren nicht dargestellt ist schließlich die Verwendung von Wärmerohren zum Abtransport der bei der vorstehend beschriebenen Anordnung entstehenden Verlustwärme der Stirlingmotoren.

## Patentansprüche

1. Energieerzeugungseinrichtung, insbesondere für Satelliten und Raumstationen, auf der Basis von Stirlingmotoren, bei der die Stirlingmotoren mit einer Vorrichtung zur Adsorption von Strahlungswärme gekoppelt sind, dadurch gekennzeichnet, daß die Erhitzer (73,74) der Stirlingmotoren mit Scheibenkollektoren (77,78) verbunden sind, die die Stirlingmotoren kegelförmig umgeben und die im Inneren eines Schmelzwärmespeichers (81) angeordnet sind.

2. Energieerzeugungseinrichtung nach Anspruch 1, dadurch gekennzeichnet, daß vier Stirlingmotoren kreuzförmig angeordnet sind.

3. Energieerzeugungseinrichtung nach Anspruch 2, dadurch gekennzeichnet, daß die Kolben (5-8,33,34, 65-68) der Stirlingmotoren mit einem zentrisch angeordneten Kreuzrädergetriebe (25,75) verbunden sind.

4. Energieerzeugungseinrichtung nach Anspruch 3, dadurch gekennzeichnet, daß das Kreuzrädergetriebe (25,75) über eine Magnetkupplung (47) mit einem Generator (46) verbunden ist.

5. Energieerzeugungseinrichtung nach einem der Ansprüche 1 bis 4, dadurch gekennzeichnet, daß die Anordnung modulförmig aufgebaut ist.

## Claims

1. Energy generation device, particularly for satellites and space stations, based on Stirling engines, in which the Stirling engines are coupled to a device for the adsorption of radiant heat, characterized in that the heaters (73, 74) of the Stirling engines are connected to disk collectors (77, 78) which surround the Stirling engines in a conical manner and which are arranged in the interior of a heat of fusion accumulator (81).

2. Energy generation device according to Claim 1, characterized in that four Stirling engines are arranged in a cruciform manner.

3. Energy generation device according to Claim 2, characterized in that the pistons (5-8, 33, 34, 65-68) of the Stirling engines are connected to a centrally arranged cross wheel gear (25, 75).

4. Energy generation device according to Claim 3, characterized in that the cross wheel gear (25, 75) is connected to a generator (46) via a magnetic coupling (47).

5. Energy generation device according to one of Claims 1 to 4, characterized in that the arrangement is constructed in modular shape.

## Revendications

1. Dispositif de production d'énergie, plus particulièrement pour des satellites et des stations spatiales, sur la base de moteurs Stirling, dans laquelle les moteurs Stirling sont couplés à un dispositif destiné à absorber la chaleur rayonnante, caractérisé en ce que les chauffages (73, 74) des moteurs Stirling sont connectés à des collecteurs à disques (77, 78) qui entourent les moteurs Stirling de manière conique et qui sont disposés à l'intérieur d'un accumulateur de chaleur de fusion (81).

2. Dispositif de production d'énergie suivant la revendication 1, caractérisé en ce que quatre moteurs Stirling sont disposés en croix.

3. Dispositif de production d'énergie suivant la revendication 2, caractérisé en ce que les pistons (5-8, 33, 34, 65-68) des moteurs Stirling sont connectés à un train d'engrenages croisés (25-75) central.

4. Dispositif de production d'énergie suivant la revendication 3, caractérisé en ce que le train d'engrenages croisés (25, 75) est connecté par l'intermédiaire d'un couplage magnétique (47) à un générateur (46).

5. Dispositif de production d'énergie suivant l'une ou l'autre des revendications 1 à 4, caractérisé en ce que le dispositif est conçu sous la forme d'un module.
